# EUROPÄISCHE PATENTSCHRIFT

(11) **EP 1 355 073 B1**
(45) Veröffentlichungstag und Bekanntmachung des Hinweises auf die Patenterteilung: **23.03.2005**
(21) Anmeldenummer: 03000833.8
(22) Anmeldetag: 15.01.2003
(51) Int. Cl.: F16D 3/38

(54) **Gelenkgabel und Kreuzgelenk mit einer solchen**
Joint yoke and hooke's joint comprising same
Fourchette d'articulation et joint universal avec la même

(30) Priorität: 15.04.2002 DE 10216656
(43) Veröffentlichungstag der Anmeldung: 22.10.2003
(73) Patentinhaber: Spicer Gelenkwellenbau GmbH & Co. KG, 45143 Essen (DE)
(72) Erfinder: Gille, Wilfried, 46286 Dorsten (DE); Bischoff, Walter, Ing., 48167 Münster (DE)
(74) Vertreter: Harwardt, Günther, Dipl.-Ing.

(56) Entgegenhaltungen:
- GB-A- 705 009
- US-A- 3 423 958
- US-A- 6 056 644
- US-B1- 6 257 986

## Beschreibung

Die Erfindung betrifft eine Gelenkgabel für ein Kreuzgelenk und ein Kreuzgelenk umfassend eine solche.

Der US 5647 799 A ist ein Kreuzgelenk mit einer Gelenkgabel, die dem Oberbegriff des Anspruches 1 entspricht, zu entnehmen. Die Gelenkgabel umfasst eine Längsachse und einen auf dieser zentrierten Basisabschnitt, von dem zwei Gabelarme ausgehen. Diese sind in entgegengesetzten Richtungen von der Längsachse versetzt angeordnet. Jeder Gabelarm umfasst eine Lagerbohrung. Die Lagerbohrungen beider Gabelarme sind auf einer gemeinsamen Bohrungsachse angeordnet, welche rechtwinklig zur Längsachse verläuft. Jeder Gabelarm weist zwei Armabschnitte auf, die einstückig mit dem Basisabschnitt ausgebildet sind und von diesem vorstehen. Die beiden Armabschnitte sind durch die Lagerbohrung getrennt und besitzen dem Basisabschnitt entfernt Endflächen. In jeder dieser Endflächen ist jeweils eine Gewindebohrung angeordnet. Ferner umfasst jeder Gabelarm ein Brückenelement, das seine beiden Armabschnitte miteinander verbindet und den Endflächen entsprechend ausgebildete Anlageflächen aufweist, mit denen das Brückenelement an den beiden Endflächen der Armabschnitte anliegend durch Schrauben befestigt ist. Hierzu weisen die Brückenelemente in den Anlageflächen liegend jeweils eine Durchgangsbohrung auf, durch die eine Gewindekopfschraube in die Gewindebohrung des zugehörigen Armabschnittes eingeschraubt werden kann.

Solche Gelenkgabeln und damit auch Kreuzgelenke, die diese Gelenkgabeln aufweisen, sind für einen bestimmten Drehmomentbereich ausgelegt. Für hohe Drehmomente, wie sie beispielsweise im Antrieb von Walzwerken auftreten, können Brückenelemente vorgesehen sein, die mit mehr als einer Schraube mit dem zugehörigen Armabschnitt verbunden werden. Der Rotationsdurchmesser solcher Gelenkgabeln ist jedoch beschränkt, weil im eingebauten Zustand nur ein geringer Bauraum zur Verfügung steht. Aus diesem Grunde muss eine möglichst hohe Drehmomentübertragungsfähigkeit erzielt werden. Dies bedeutet, dass für eine Gelenkgabel eine möglichst große Lagerbüchse unterzubringen ist, weshalb die Lagerbohrung entsprechend groß auszulegen ist. Dies bedeutet, dass die Größe des Brückenelementes und damit auch die Größe der Endflächen einerseits von der Größe der Lagerbohrung und andererseits von dem Rotationsdurchmesser abhängig sind. Somit ist die Verbindung zwischen Brückenelement und den Armabschnitten von besonderer Bedeutung.

Der Erfindung liegt die Aufgabe zugrunde, eine Gelenkgabel vorzuschlagen, die eine hohe Drehmomentübertragungsfähigkeit aufweist.

Diese Aufgabe wird erfindungsgemäß durch eine Gelenkgabel gelöst, die dadurch gekennzeichnet ist, dass in den Endflächen jeweils mindestens zwei Gewindebohrungen vorgesehen sind, deren Zentren, jeweils projiziert auf die Bohrungsachse der benachbarten Lagerbohrung, mit unterschiedlichem Abstand zur Längsachse angeordnet sind, wobei die Gewindebohrung, die mit dem größten Abstand zur Längsachse angeordnet ist, einen größeren Durchmesser aufweist als die weiteren Gewindebohrungen.

Von Vorteil bei dieser Ausbildung ist, dass die, projiziert auf die Bohrungsachse, am weitesten von der Längsachse entfernt angeordneten Schrauben je Endfläche dafür Sorge tragen, dass die Drehmomentkapazität deutlich gegenüber einer Anordnung, bei der die Schrauben und damit die Gewindebohrungen mit gleichen Durchmessern ausgelegt sind, erhöht ist.

Ein weiterer Vorteil besteht darin, dass aufgrund dessen, dass die, bezogen auf die Bohrungsachse, der Längsachse näherliegenden Gewindebohrungen und damit auch die zugehörigen Schrauben kleiner ausgebildet sind, auch die Abwinklungsfähigkeit der beiden Gelenkgabeln eines Kreuzgelenkes zueinander vergrößert werden kann. Es kann also bei ansonsten gleicher Auslegung ein größerer Beugewinkel erreicht werden.

In Ausgestaltung der Erfindung ist vorgesehen, dass die Endflächen der Armabschnitte und die Anlageflächen der Brückenelemente mit Verzahnungen versehen sind. Vorzugsweise verlaufen deren Zähne parallel zur Bohrungsachse. Hierdurch kann die Verbindung zwischen den beiden Armabschnitten über das Brückenelement noch verbessert werden, da der je nach Drehrichtung nicht belastete Armabschnitt stärker mit an der Übertragung beteiligt wird.

Für den Fall, dass drei Gewindebohrungen vorgesehen sind, ist es möglich, zwei der Gewindebohrungen mit gleichem Durchmesser auszugestalten, während die Dritte, projiziert auf die Bohrungsachse der benachbarten Lagerbohrung, der Längsachse am entferntesten in der Endfläche liegende Gewindebohrung einen größeren Durchmesser aufweist. Alternativ ist es jedoch auch möglich, für den Fall, dass drei Gewindebohrungen vorgesehen sind, alle mit unterschiedlichem Durchmesser zu gestalten. Im übrigen können alle drei Gewindebohrungen, projiziert auf die Bohrungsachse der benachbarten Lagerbohrung, mit unterschiedlichem Abstand zur Längsachse angeordnet sein. In weiterer Konkretisierung der Erfindung ist vorgesehen, dass jeweils bei den Endflächen die Gewindebohrung, die den größten Durchmesser aufweist, die geringste Distanz zur Bohrungsachse aufweisen.

Es können darüber hinaus die je Endfläche vorgesehenen Gewindebohrungen alle mit unterschiedlichen Distanzen zu der Bohrungsachse angeordnet sein.

Vorzugsweise wird die, projiziert auf die Bohrungsachse der benachbarten Lagerbohrung, mit dem größten Abstand zur Längsachse angeordnete Gewindebohrung im Durchmesser zwischen 1 und 30 % größer bemessen ist als die nächstkleinere Gewindebohrung, wodurch sich erhebliche Steigerungen in der Übertragungsfähigkeit erzielen lassen. So wird, wenn beispielsweise diese Gewindebohrung um ca. 20 % im Durchmesser größer bemessen wird als die nächstkleinere Gewindebohrung, eine Steigerung der Übertragungskapazität um mehr als 20 % gegenüber einer Anordnung erzielt, bei der sämtliche Gewindebohrungen einer Endfläche gleichgroße Durchmesser aufweisen.

Gelöst wird die erfindungsgemäße Aufgabe auch durch ein Kreuzgelenk, das eine erste Gelenkgabel, die entsprechend einem oder mehreren der Merkmale der erfindungsgemäßen Gelenkgabel ausgebildet ist, eine zweite Gelenkgabel und ein Zapfenkreuz umfasst, das die erste Gelenkgabel mit der zweiten Gelenkgabel verbindet.

Vorzugsweise ist jedoch auch die zweite Gelenkgabel wie die erste Gelenkgabel entsprechend den Merkmalen der erfindungsgemäßen Gelenkgabel ausgebildet.

In der Zeichnung ist ein Ausführungsbeispiel der erfindungsgemäßen Gelenkgabel sowie eines Kreuzgelenkes schematisch dargestellt.

Es zeigt
- Figur 1: eine Seitenansicht eines Kreuzgelenkes mit einer erfindungsgemäßen Gelenkgabel,
- Figur 2: eine erfindungsgemäße Gelenkgabel als Einzelteil, teilweise geschnitten,
- Figur 3: eine Draufsicht zu Figur 2, wobei jedoch das Brückenelement im unmontierten Zustand dargestellt ist,
- Figur 4: eine teilweise Darstellung der Gelenkgabel gemäß Figur 3, mit Ansicht auf eine Endfläche des ersten Gabelarmes im vergrößerten Maßstab,
- Figur 5: eine Ansicht entsprechend Figur 4, jedoch mit montiertem Brückenelement.

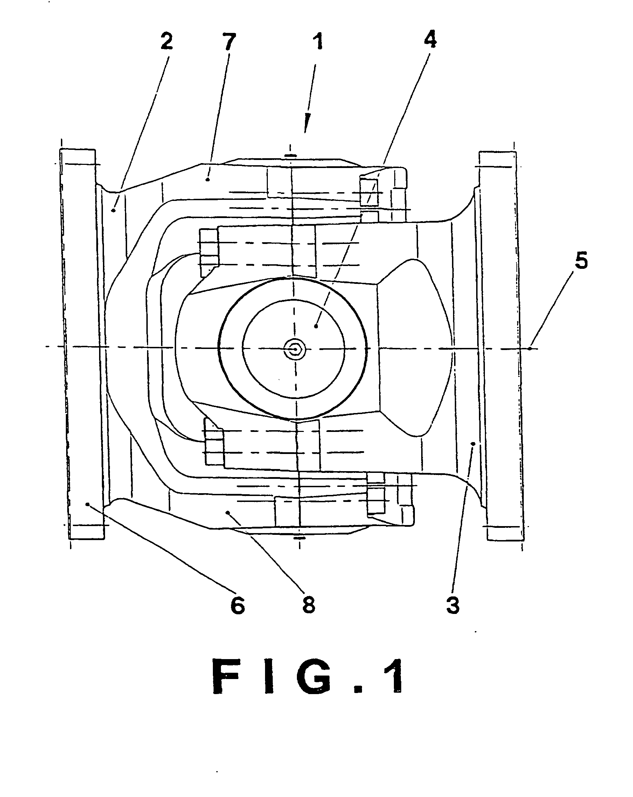

Figur 1 zeigt ein Kreuzgelenk 1 mit der ersten Gelenkgabel 2 und der zweiten Gelenkgabel 3, die durch ein Zapfenkreuz 4 gelenkig miteinander verbunden sind. Alle Bauteile sind auf der Längsachse 5 zentriert dargestellt, was bedeutet, dass die erste Gelenkgabel 2 zur zweiten Gelenkgabel 3 nicht abgewinkelt ist.

Beide Gelenkgabeln 2, 3 können gleich gestaltet sein. Es ist jedoch auch eine unterschiedliche Gestaltung möglich. Eine dieser Gelenkgabeln, nämlich die erste Gelenkgabel 2, wird nachfolgend hinsichtlich ihrer Ausgestaltung näher erläutert. Sie umfasst einen Basisabschnitt 6, der auf der Längsachse 5 zentriert ist und zwei Gabelarme, nämlich den ersten Gabelarm 7 und den zweiten Gabelarm 8. Beide sind in entgegengesetzten Richtungen von der Längsachse 5 versetzt am Basisabschnitt 6 angebracht.

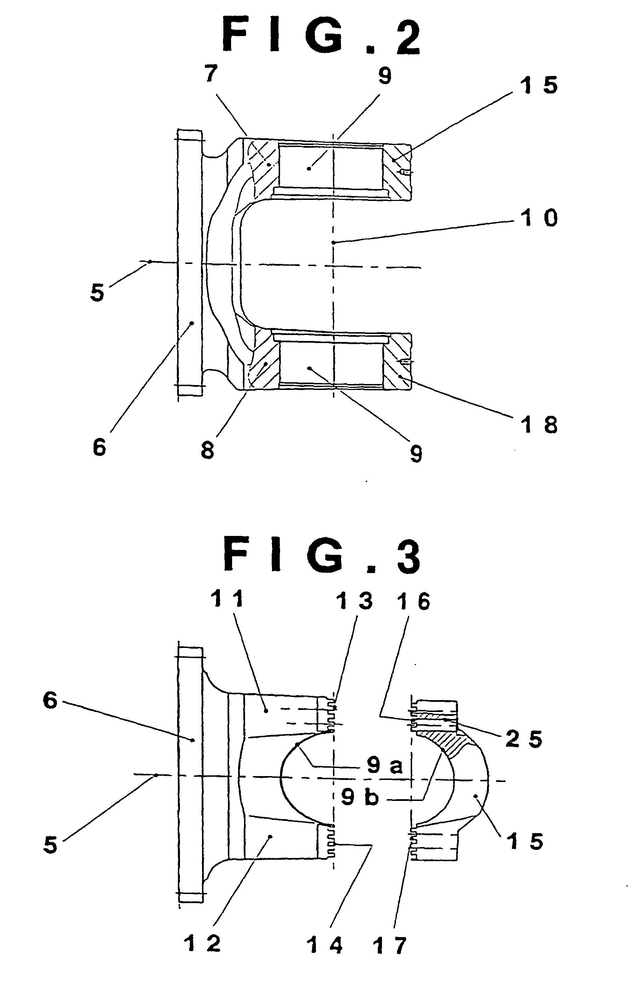

Nachfolgend erfolgt eine Erläuterung der erfindungsgemäß gestalteten ersten Gelenkgabel 2 anhand der Figuren 2 bis 5.

Die erste Gelenkgabel 2 umfasst den ersten Gabelarm 7, der in der Darstellung gemäß Figur 2 nach oben von der Längsachse 5 versetzt angeordnet ist und den zweiten Gabelarm 8, der in Figur 2 von der Längsachse 5 nach unten versetzt angeordnet ist. Die beiden Gabelarme 7, 8 sind gleich gestaltet. Durch die beiden Gabelarme 7, 8 verläuft jeweils eine Lagerbohrung 9. Beide Lagerbohrungen 9 sind auf der Bohrungsachse 10 zentriert. Die Bohrungsachse 10 verläuft rechtwinklig zur Längsachse 5. Die beiden Gabelarme 7, 8 sind gleich gestaltet und sie sind geteilt ausgebildet und umfassen jeweils zwei Armabschnitte und ein Brückenelement 15 bzw. 18. Nachfolgend wird die Gestaltung eines Gabelarms, nämlich des ersten Gabelarmes 7, näher erläutert. Diese Erläuterungen treffen auch auf die Gestaltung des zweiten Gabelarmes 8 zu.

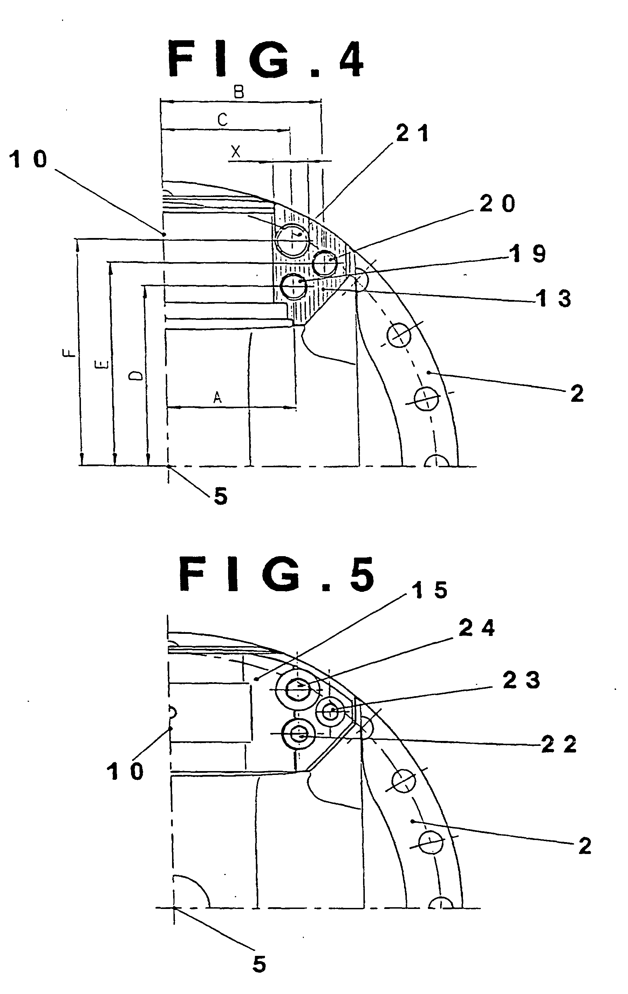

Wie insbesondere aus Figur 3 ersichtlich, umfasst der erste Gabelarm 7 zwei Armabschnitte, nämlich den ersten Armabschnitt 11 und den zweiten dazu beabstandeten Armabschnitt 12, die einstückig mit dem Basisabschnitt 6 der ersten Gelenkgabel 2 verbunden sind. Die beiden Armabschnitte 11, 12 sind durch den Bohrungsabschnitt 9a der Lagerbohrung 9 voneinander getrennt. Sie weisen dem Basisabschnitt 6 entfernt Endflächen 13 bzw. 14 auf, welche jeweils mit Verzahnungen versehen sind, deren Zähne vorzugsweise parallel zur Bohrungsachse 10 der benachbarten Lagerbohrung 9 verlaufen. Dadurch, dass der Gabelarm 7 geteilt ist, ist ein Abschnitt 9b der Lagerbohrung 9 Bestandteil des Brückenelementes 15. Das Brückenelement 15 besitzt zwei Anlageflächen 16, 17, wobei die erste Anlagefläche 16 zu der ersten Endfläche 13 passend ausgebildet ist und die zweite Anlagefläche 17 zur zweiten Endfläche 14 passend ausgebildet ist. Die Verzahnungen beider jeweils ein Paar bildenden Flächen 13, 16 bzw. 14, 17 greifen ineinander, so dass eine innige Verbindung zwischen dem Brückenelement 15 einerseits und den beiden Armabschnitten 11, 12 andererseits gegeben ist. Zusätzlich ist vorgesehen, dass das Brückenelement 15 im Bereich der Endflächen 13, 14 bzw. Anlageflächen 16, 17 mit den Armabschnitten 11 bzw. 12 durch Schrauben verbunden wird. Hierzu sind in dem Brückenelement 15 im Bereich der Anlageflächen 16,17 liegend Durchgangsbohrungen vorgesehen. Da jedoch mehrere Kopfschrauben zur Verbindung genutzt werden, die aus Figur 5 ersichtlich sind, welche wie nachfolgend erläutert angeordnet sind, ist in Figur 3 nur eine Durchgangsbohrung 25 ersichtlich.

In Figur 4 ist die Anordnung und Ausbildung von Gewindebohrungen 19, 20, 21 bezüglich der ersten Endfläche 13 ersichtlich. Es ist die erste Gewindebohrung 19 im Verhältnis zur Bohrungsachse 10 mit der Distanz A und, projiziert auf die Bohrungsachse 10 der benachbarten Lagerbohrung 9, im Verhältnis zur Längsachse 5 mit dem Abstand D angeordnet. Die Gewindebohrung 19 hat einen vorgegebenen Durchmesser. Die zweite Gewindebohrung 20 ist zur ersten Gewindebohrung 19 in Figur 4 auf dem Abstand E projiziert auf die Bohrungsachse 10 von der Längsachse 5 und auf die Distanz B im Verhältnis zur Bohrungsachse 10 angeordnet. Sie ist also gegenüber der ersten Gewindebohrung 19 versetzt. Die dritte Gewindebohrung 21 befindet sich auf einem gegenüber den Abständen D und E größeren Abstand F, gemessen als Projektion ihres Zentrums auf die Bohrungsachse 10 der benachbarten Lagerbohrung 9, zur Längsachse 5. Im Verhältnis zur Bohrungsachse 10 ist die dritte Gewindebohrung 21 mit der Distanz C angeordnet. Die dritte Gewindebohrung 21 weist also gegenüber den weiteren Gewindebohrungen 19, 20 den größten Abstand zur Längsachse 5 auf. Darüber hinaus ist ihr Durchmesser X auch im Verhältnis zu dem der anderen Gewindebohrungen 19, 20 deutlich (in der Größenordnung zwischen 1 und 35 %, vorzugsweise 20 %) vergrößert. An der zugehörigen Anlagefläche 16 sind der Anordnung der Gewindebohrungen 19, 20, 21 entsprechend Durchgangsbohrungen angebracht, die an die Durchmesser der in die Gewindebohrungen 19, 20, 21 einzuschraubenden Schrauben, beispielsweise Kopfschrauben 22, 23, 24 gemäß Figur 5 angepasst sind. In Figur 3 ist lediglich die zugehörige Durchgangsbohrung 25 durch das Brückenelement 15 bezüglich der dritten Gewindebohrung 21 im Brückenelement 15 ersichtlich. Die Kopfschrauben 22, 23, 24 werden durch die entsprechenden Bohrungen im Brückenelement 15 hindurch in die Gewindebohrung 19 bzw. 20 bzw. 21 eingeführt, wobei die Kopfschraube 24 zur Durchgangsbohrung 25 im Brückenelement 15 und zur größten Gewindebohrung 21 in dem ersten Armabschnitt 11 bzw. dessen Endfläche 13 gehört. Beim dargestellten Ausführungsbeispiel sind je Endfläche drei Gewindebohrungen vorgesehen. Es ist jedoch auch eine größere Anzahl denkbar, wobei jedoch jeweils die auf dem größten Abstand zur Längsachse 5 liegende Gewindebohrung auch den größten Durchmesser aufweisen soll. Die weiteren Gewindebohrungen können jeweils unter sich gleiche Durchmesser aufweisen, aber auch im Durchmesser unterschiedlich gestaltet sein. Eine kompakte Ausbildung ergibt sich insbesondere, wenn die den größten Durchmesser aufweisende dritte Gewindebohrung 21 gegenüber den weiteren Gewindebohrungen 19, 20 näher zur Bohrungsachse 10 liegend angeordnet ist oder zumindest mit der Gewindebohrung 19, die auf dem kleinsten Abstand zur Längsachse 5 angeordnet ist, hinsichtlich ihrer Bohrungsachsen gleiche Abstände zur Bohrungsachse 10 aufweisen. Soweit im Zusammenhang mit den Gewindebohrungen 19, 20, 21 Erläuterungen hinsichtlich der Entfernung zur Bohrungsachse 10 bzw. Längsachse 5 gegeben wurden, sind jeweils die Abstände der Zentren bzw. Achsen dieser Gewindebohrungen 19, 20, 21 projiziert auf die Bohrungsachse 10 der benachbarten Lagerbohrung 9 im Verhältnis zur Längsachse 5 bzw. deren Distanz zur Bohrungsachse 10 gemeint. Die für die Endfläche 13 erfolgten Erläuterungen gelten entsprechend für alle Endflächen der Armabschnitte beider Gabelarme 7, 8 der Gelenkgabel.

### Bezugszeichenliste

- 1: Kreuzgelenk
- 2: erste Gelenkgabel
- 3: zweite Gelenkgabel
- 4: Zapfenkreuz
- 5: Längsachse
- 6: Basisabschnitt
- 7: erster Gabelarm
- 8: zweiter Gabelarm
- 9, 9a, 9b: Lagerbohrung
- 10: Bohrungsachse
- 11: erster Armabschnitt
- 12: zweiter Armabschnitt
- 13: erste Endfläche
- 14: zweite Endfläche
- 15: erstes Brückenelement
- 16: erste Anlagefläche
- 17: zweite Anlagefläche
- 18: zweites Brückenelement
- 19: erste Gewindebohrung
- 20: zweite Gewindebohrung
- 21: dritte Gewindebohrung
- 22: erste Kopfschraube / Schraube
- 23: zweite Kopfschraube / Schraube
- 24: dritte Kopfschraube / Schraube
- 25: Durchgangsbohrung
- A: Distanz
- B: Distanz
- C: Distanz
- D: Abstand
- E: Abstand
- F: Abstand
- X: Durchmesser

## Patentansprüche

1. Gelenkgabel für ein Kreuzgelenk, die
- eine Längsachse (5) aufweist,
- einen Basisabschnitt (6) aufweist, der auf der Längsachse (5) zentriert ist,
- zwei Gabelarme (7, 8) umfasst,
- die in entgegengesetzten Richtungen von der Längsachse (5) versetzt sind,
- die jeweils eine Lagerbohrung (9) aufweisen, wobei die Lagerbohrungen (9) eine gemeinsame Bohrungsachse (10) aufweisen, welche rechtwinklig zur Längsachse (5) verläuft,
- die jeweils zwei mit dem Basisabschnitt (6) einstückige Armabschnitte (11, 12) aufweisen, welche **durch** die Lagerbohrung (9) getrennt sind und dem Basisabschnitt (6) entfernt Endflächen (13, 14) besitzen,
- die jeweils ein Brückenelement (15, 18) aufweisen, das die beiden Armabschnitte (11, 12) verbindet und mit den Endflächen (13, 14) entsprechend ausgebildeten Anlageflächen (16, 17) versehen ist, in denen entsprechend den Gewindebohrungen (19, 20, 21) ausgebildete und angeordnete Durchgangsbohrungen (25) liegen,
- Schrauben (22, 23, 24) umfasst,
die zur Befestigung der Brückenelemente (15, 18) an den Armabschnitten (11, 12) der Gabelarme (7, 8) dienen und den Gewindebohrungen (19, 20, 21) und den Durchgangsbohrungen (25) angepasst sind
**dadurch gekennzeichnet,**
**dass** in den Endflächen (13, 14) jeweils mindestens zwei Gewindebohrungen (19, 20, 21) vorgesehen sind, deren Zentren, jeweils projiziert auf die Bohrungsachse (10) der benachbarten Lagerbohrung (9), mit unterschiedlichem Abstand (D, E, F) zur Längsachse (5) angeordnet sind, wobei die Gewindebohrung (21), die mit dem größten Abstand (F) zur Längsachse (5) angeordnet ist, einen größeren Durchmesser (X) aufweist als die weiteren Gewindebohrungen (19, 20).

2. Gelenkgabel nach Anspruch 1,
**dadurch gekennzeichnet,**
**dass** die Endflächen (13, 14) der Armabschnitte (11, 12) und die Anlageflächen (16, 17) der Brückenelemente (15, 18) mit Verzahnungen versehen sind.

3. Gelenkgabel nach Anspruch 2,
**dadurch gekennzeichnet,**
**dass** die Zähne der Verzahnungen parallel zur Bohrungsachse (10) verlaufen.

4. Gelenkgabel nach Anspruch 1,
**dadurch gekennzeichnet,**
**dass** je Endfläche (13, 14) drei Gewindebohrungen (19, 20, 21) und je Anlagefläche (16, 17) drei diesen entsprechende Durchgangsbohrungen (25) vorgesehen sind, wobei die drei Gewindebohrungen (19, 20, 21) alle mit unterschiedlichem Abstand (D, E, F) zur Längsachse (5) angeordnet sind.

5. Gelenkgabel nach Anspruch 4,
**dadurch gekennzeichnet,**
**dass** die je Endfläche (13, 14) vorgesehenen drei Gewindebohrungen (19, 20, 21) alle unterschiedliche Durchmesser aufweisen.

6. Gelenkgabel nach Anspruch 1,
**dadurch gekennzeichnet,**
**dass** je Endfläche (13, 14) die Gewindebohrung (21), die den größten Durchmesser (X) aufweist, die geringste Distanz (C) zur Bohrungsachse (10) aufweist.

7. Gelenkgabel nach Anspruch 6,
**dadurch gekennzeichnet,**
**dass** die je Endfläche (13, 14) vorgesehenen Gewindebohrungen (19, 20, 21) alle unterschiedliche Distanzen (A, B, C) zu der Bohrungsachse (10) aufweisen.

8. Gelenkgabel nach Anspruch 1,
**dadurch gekennzeichnet,**
**dass** die Gewindebohrung (21), die den größten Abstand zur Längsachse (5) aufweist und die zugehörige Schraube (24) im Durchmesser um 1 - 30 %, vorzugsweise 20 %, größer bemessen ist als die nächstkleinere Gewindebohrung (20) bzw. Schraube (23).

9. Kreuzgelenk umfassend
- eine erste Gelenkgabel (2),
die nach einem der Ansprüche 1 bis 8 ausgebildet ist,
- eine zweite Gelenkgabel (3) und
- ein Zapfenkreuz (4),
das die erste Gelenkgabel (2) und die zweite Gelenkgabel (3) miteinander verbindet.

10. Kreuzgelenk nach Anspruch 9, **dadurch gekennzeichnet,**
**dass** auch die zweite Gelenkgabel (3) nach einem der Ansprüche 1 bis 8 ausgebildet ist.

## Claims

1. Joint yoke for a universal joint,
- having a longitudinal axis (5),
- having a base portion (6), centred on the longitudinal axis (5),
- comprising two yoke arms (7, 8),
- off-set in opposite directions from the longitudinal axis (5),
- having, respectively, a support bore (9), wherein the support bores (9) have a common bore axis (10), extending at a right angle to the longitudinal axis (5),
- having, respectively, two arm portions (11, 12), formed integrally with the base portion (6), which are separated by the support bore (9) and have end faces (13, 14) distanced from the base portion (6),
- having, respectively, a bridge portion (15, 18), connecting the two arm portions (11, 12) and provided with abutment faces (16, 17) formed correspondingly to the end faces (13, 14), in which end faces (13, 14) through bores (25) are arranged, which are formed and arranged correspondingly to the threaded bores (19, 20,21),
- comprising screws (22, 23, 24),
which serve for fixing of the bridge portions (15, 18) on the arm portions (11, 12) of the yoke arms (7, 8) and which are adapted to the threaded bores (19, 20, 21 ) and the through bores (25),
**characterised in that**
in the end faces (13, 14), respectively, at least two threaded bores (19, 20, 21) are provided, which centres are arranged, respectively, projected onto the bore axis (10) of the neighbouring support bore (9), with different distances (D, E, F) to the longitudinal axis (5), wherein the threaded bore (21), arranged with the largest distance (F) to the longitudinal axis (5), has a larger diameter (X) than the further threaded bores (19, 20).

2. Joint yoke according to claim 1,
**characterised in that**
the end faces (13, 14) of the arm portions (11, 12) and the abutment faces (16, 17) of the bridge portions (15, 18) are provided with toothings.

3. Joint yoke according to claim 2,
**characterised in that**
the teeth of the toothings extend parallel to the bore axis (10).

4. Joint yoke according to claim 1,
**characterised in that**
for each end face (13, 14) three threaded bores (19, 20, 21) and for each abutment face (16, 17) three through bores (25), formed correspondingly to the threaded bores, are provided, wherein the three threaded bores (19, 20, 21) are, all, arranged with different distances (D, E, F) to the longitudinal axis (5).

5. Joint yoke according to claim 4,
**characterised in that**
the three threaded bores (19, 20, 21) provided for each end face (13, 14) have all different diameters.

6. Joint yoke according to claim 1,
**characterised in that**
for each end face (13, 14) the threaded bore (21), having the largest diameter (X), is arranged with the smallest distance (C) to the bore axis (10).

7. Joint yoke according to claim 6,
**characterised in that**
the threaded bores (19, 20, 21) provided for each end face (13, 14) have all different distances (A, B, C) to the bore axis (10).

8. Joint yoke according to claim 1,
**characterised in that**
the threaded bore (21), having the largest distance to the longitudinal axis (5), and the screw (24) fitting to the threaded bore (21) are dimensioned larger in diameter by 1 through 30 %, preferably, by 20 %, than the next smaller threaded bore (20) or screw (23), respectively.

9. Universal joint comprising
- a first joint yoke (2),
formed according to one of claims 1 to 8,
- a second joint yoke (3) and
- a journal cross (4),
connecting the first joint yoke (2) and the second joint yoke (3).

10. Universal joint according to claim 9,
**characterised in that**
also the second joint yoke (3) is formed according to one of claims 1 to 8.

## Revendications

1. Fourchette de joint pour un joint universel à croisillon, qui :
- présente un axe longitudinal (5),
- comporte un tronçon de base (6) qui est centré sur l'axe longitudinal (5),
- comporte deux bras de fourchette (7, 8)
- qui sont décalés de l'axe longitudinal (5) dans des directions opposées,
- qui comportent chacun un alésage de palier (9), les alésages de palier (9) présentant un axe d'alésage (10) commun s'étendant de manière perpendiculaire à l'axe longitudinal (5),
- qui présentent chacun deux tronçons de bras (11, 12) réalisés d'un seul tenant avec le tronçon de base (6), séparés par l'alésage de palier (9) et possédant des surfaces d'extrémités (13, 14) éloignées du tronçon de base (6),
- qui comprennent chacun un élément de pontage (15, 18) reliant les deux tronçons de bras (11, 12) et pourvu de surfaces d'appui (16, 17) de configuration correspondant à celle des surfaces d'extrémité (13, 14) et dans lesquelles se situent des alésages de passage (25) disposés et configurés conformément aux alésages taraudés (19, 20, 21),
- et comporte des vis (22, 23, 24), qui servent à la fixation des éléments de pontage (15, 18) sur les tronçons de bras (11, 12) des bras de fourchette (7, 8), et qui sont adaptées aux alésages taraudés (19, 20, 21) et aux alésages de passage (25),
**caractérisée en ce que** dans les surfaces d'extrémité (13, 14) sont prévus respectivement au moins deux alésages taraudés (19, 20, 21) dont les centres, chacun en projection sur l'axe d'alésage (10) de l'alésage de palier (9) voisin, sont disposés à une distance (D, E, F) différente de l'axe longitudinal (5), l'alésage taraudé (21), qui est disposé à la distance (F) la plus grande de l'axe longitudinal (5), présentant un diamètre (X) plus grand que les autres alésages taraudés (19, 20) .

2. Fourchette de joint selon la revendication 1, **caractérisée en ce que** les surface d'extrémité (13, 14) des tronçons de bras (11, 12), et les surfaces d'appui (16, 17) des éléments de pontage (15, 18) sont munies de dentures.

3. Fourchette de joint selon la revendication 2, **caractérisée en ce que** les dents des dentures s'étendent parallèlement à l'axe d'alésage (10).

4. Fourchette de joint selon la revendication 1, **caractérisée en ce que** pour chaque surface d'extrémité (13, 14) sont prévus trois alésages taraudés (19, 20, 21), et pour chaque surface d'appui (16, 17) trois alésages de passage (25) correspondant aux dits trois alésages taraudés, les trois alésages taraudés (19, 20, 21) étant tous disposés à une distance (D, E, F) différente de l'axe longitudinal (5).

5. Fourchette de joint selon la revendication 4, **caractérisée en ce que** les trois alésages taraudés (19, 20, 21) prévus par surface d'extrémité (13, 14) présentent tous des diamètres différents.

6. Fourchette de joint selon la revendication 1, **caractérisée en ce que** sur chaque surface d'extrémité (13, 14), l'alésage (21), qui a le diamètre (X) le plus grand, présente la distance (C) la plus petite à l'axe d'alésage (10).

7. Fourchette de joint selon la revendication 6, **caractérisée en ce que** les alésages taraudés (19, 20, 21) prévus par surface d'extrémité (13, 14) présentent tous des distances (A, B, C) différentes à l'axe d'alésage (10).

8. Fourchette de joint selon la revendication 1, **caractérisée en ce que** l'alésage taraudé (21), qui présente la distance la plus grande à l'axe longitudinal (5), et la vis (24) associée, sont dimensionnés, quant à leur diamètre, de manière à être de 1 - 30%, de préférence de 20 %, plus grands que l'alésage taraudé (20) et respectivement la vis (23) de taille plus petite la plus proche.

9. Joint universel à croisillon comprenant
- une première fourchette de joint (2), qui est réalisée selon l'une des revendications 1 à 8,
- une seconde fourchette de joint (3), et
- un croisillon (4) qui relie la première fourchette de joint (2) et la seconde fourchette de joint (3) l'une à l'autre.

10. Joint universel à croisillon selon la revendication 9, **caractérisé en ce que** la seconde fourchette de joint (3) est également réalisée selon l'une des revendications 1 à 8.
